# EUROPEAN PATENT APPLICATION

(11) **EP 4 492 109 A1**
(43) Date of publication of application: **15.01.2025**
(21) Application number: 24186196.2
(22) Date of filing: 03.07.2024
(51) Int. Cl.: G02B 6/44

(54) **OPTICAL CABLE MODULE**

(30) Priority: 06.07.2023 IT 202300014184
(71) Applicant: Prysmian S.p.A., 20126 Milan (IT)
(72) Inventor: NGUYEN, Thanh Nam, Avion (FR); SILLARD, Pierre, Paris (FR); MENTZLER, Cyril, Lille (FR); FERRI, Giuseppe, Milano (IT)
(74) Representative: Porta & Consulenti Associati S.p.A.

(57) **Abstract**

The present disclosure relates to a cable module (1) comprising a sheath (2) defining a cable module interior (3); N first optical fibers (4) extending longitudinally through the cable module interior (3), each of the N first optical fibers (4) having a unique color selected among C different colors, wherein N and C are both integers higher than 1; and M second optical fibers (5) extending longitudinally through the cable module interior (3), each of the M second optical fibers (5) having a unique color selected among said C different colors, wherein M is an integer higher than 1. The N first optical fibers (4) all have a first diameter S1 and the M second optical fibers (5) all have a second diameter S2 different from the first diameter S1.

## Description

The present disclosure relates to an optical cable module and an optical cable comprising cable modules.

In particular, the present disclosure relates to an optical cable module useful in fiber optic cabling systems and optical networks with a high degree of fiber density like, for example, data centers, optical access networks generally called FTTX, such as FTTH (Fiber To The Home), FTTP (Fiber To The Premises), FTTB (Fiber To The Building), FTTC (Fiber To The Cabinet) FTTx as well as optical long-haul data transmission networks.

As stated by US 2022/0091352, in optical cable systems, there is the need to uniquely identify every fiber in a cable. This is especially important when a user of the cable splices the fibers to another cable or attaches connectors to the ends of the fiber. The user needs to know along which fibers in the cable specific signals are being sent. In most cables, a coloring layer applied to the fiber provides some identification.

In the industry there is, however, only a limited number (specifically, twelve) of commonly used colors for optical fibers.

In order to increase the number of fibers that can be uniquely identified in high fiber density applications, several solutions have been proposed in the art.

One method to distinguish a first group of colored 1-12 fibers (each with a unique color among twelve commonly used colors) with a second group of 13-24 fibers respectively having the same colors as the first group is to provide fibers 13-24 with marking indicia, such as rings or dashes or lines to distinguish them from fibers 1-12.

For example, US 5 796 905 discloses an optical fiber comprising: a fiber core; a cladding surrounding the fiber core; a coating made of at least one plastic layer surrounding the cladding; a color marking joined with the coating; and a further layer extending continuously along the full length of the fiber and covering the color marking, the further layer is colored and made substantially solely from a material which permits transmission of rays of light so the color marking can be seen therethrough.

Another solution is proposed, for example, by US 9 195 018 that discloses a cable comprising: a cable jacket; a core located within the cable jacket, the core comprising: a core tube; and a first group of optical fibers disposed within the core tube; and a second group of optical fibers disposed within the cable jacket and outside of the core tube.

A further solution is proposed, for example, by US 2022/0091352 that discloses an optical fiber cable comprising: a cable jacket defining a cable core; and a plurality of fiber bundles extending longitudinally through the core, wherein each fiber bundle comprises a plurality of optical fibers and a combination of color schemes, a first color scheme being a base color that uniquely identifies an individual fiber, and a second color scheme that uniquely identifies each individual bundle based on a common color of one element in the bundle.

In this context the Applicant noted that color marking (as proposed, for example by US 5 796 905) has several disadvantages as, for example, slowing the optical fiber cable production process, increasing the costs of manufacture, increasing the fiber diameter and the risk of affecting fiber optic attenuation.

On the other side, the solutions proposed by US 9 195 018 and US 2022/0091352 are disadvantageous in terms of larger cable size and greater complexity of the cable structure, which slow down the production process, increase costs and impact on space constraints.

The Applicant thus faced the technical problem of providing an alternative solution to provide optical fiber identification in high fiber density applications. In other words, the Applicant faced the technical problem of providing an alternative solution to increase the number of distinguishable optical fibers given a predetermined number of available colors.

In particular, the Applicant faced the technical problem of providing a cable module wherein optical fiber identification is optimized in terms of cable production time and costs as well as optical fiber performances, cable size and cable structure.

The present disclosure thus relates to a cable module according to claim 1.

In particular, in a first aspect, the present disclosure relates to a cable module comprising:
- a sheath defining a cable module interior;
- N first optical fibers extending longitudinally through the cable module interior, each of the N first optical fibers having a unique color selected among C different colors, wherein N and C are both integers higher than 1;
- M second optical fibers extending longitudinally through the cable module interior, each of the M second optical fibers having a unique color selected among said C different colors, wherein M is an integer higher than 1;
wherein the N first optical fibers all have a first diameter S1 and the M second optical fibers all have a second diameter S2 different from the first diameter S1.

In a second aspect, the present disclosure relates to an optical cable comprising a cable jacket defining a cable interior and at least one cable module according to the first aspect of the present disclosure, extending longitudinally through the cable interior.

According to the present disclosure, identification of optical fibers belonging to two groups of colored optical fibers is made possible thanks to the difference between their diameters.

In particular, given a predetermined number C of available colors, it is possible to distinguish from each other a number of colored optical fibers greater than C thanks to the difference in diameter between fibers of the same color. In other words, given a predetermined number C of available colors, it is possible to distinguish from each other N+M (with C < N+M ≤ 2*C) colored optical fibers thanks to the difference in diameter between fibers of the same color.

In this way, it is possible to distinguish from each other optical fibers having a same exterior appearance without the need to provide identifying markings on the fibers, or fiber bundles or core tubes for isolating groups of optical fibers from each other.

Indeed, according to the present disclosure, the use of identifying marking and/or the use of fiber bundles or core tubes becomes only a possible (not necessary) option to further increase the number of fibers, as illustrated in specific embodiments of the present disclosure.

Overall, the objects outlined above of providing an alternative solution and, in particular, optimising cable production time and costs as well as optical fiber performances, cable size and cable structure, are achieved.

In the present disclosure and claims, the expression "optical fiber" is used to indicate a single optical fiber. Generally, an optical fiber is made of a core surrounded by a cladding in turn surrounded by a protective coating.

In the present disclosure and claims, the term "diameter" referred to an optical fiber is used to indicate the outer diameter of the outermost layer making the optical fiber. For example, in case of an optical fiber made of a core surrounded by a cladding in turn surrounded by a protective coating, said term is used to indicate the outer diameter of the protective coating.

In the present disclosure and claims, the expression "cable module" is used to indicate a module comprising at least two optical fibers enclosed in a common protective outer sheath.

In the present disclosure and claims, the expression "optical fiber having a color" or "colored optical fiber" is used to indicate an optical fiber having a colored exterior appearance, in particular a colored exterior appearance of the outermost layer making the optical fiber. In case of an optical fiber comprising a core surrounded by a cladding, in turn surrounded by a protective coating, said expression is used to indicate a colored exterior appearance of the protective coating. Said colored exterior appearance may be obtained, for example, by adding a colorant to the base material of the outermost layer (e.g. the protective coating, in this case we speak about "mass colored" coating) or by covering the outermost layer (e.g. the protective coating) with a colored ink.

In the present disclosure and claims, a statement that an optical fiber has the same exterior appearance as another optical fiber is used to indicate two fibers identical in terms of color (i.e. in terms of colored exterior appearance) and of possible identifying marking. For example, two fibers are said to have the same exterior appearance when they have a same color and a same identifying marking, or a same color with no identifying markings.

In the present disclosure and claims, two fibers having a same exterior appearance may have a different fiber diameter.

In the present disclosure and claims, the diameter values are to be considered with a tolerance range of, for example, + or - 5 microns.

The present disclosure, in at least one of the aforementioned aspects, can be implemented according to one or more of the following embodiments, optionally combined together.

According to the present disclosure, N, M and C are all integers higher than 1.

In an embodiment, N+M>C.

In an embodiment, N+M ≤ 2*C.

For example, C < N+M ≤ 2*C, with N=C and 1 ≤ M ≤ C.

In an embodiment, N=M=C. For example, N=M=C=12.

It is noted that the present disclosure is not limited to the case of C=12 and also applies to cases of C greater or less than 12. Indeed, although 12 colors are commonly used in the industry, this may change in the future. Moreover, there may be particular applications wherein a different, even smaller, number of colors is necessary to meet special needs. In other cases, it might be useful, for example in cables with a limited number of fibres, to use only few (e.g. 2 or 3) significantly different colors, so as to reduce the number of different inks needed and/or line changes in production, but still providing the possibility of distinguishing a higher (e.g. double) number of fibers with respect to the number of colors available.

In an embodiment, at least part of the N first optical fibers respectively has the same color as a corresponding part of the M second optical fibers.

In an embodiment, the M second optical fibers respectively have the same color as at least part of the N first optical fibers.

In an embodiment, at least part of the N first optical fibers respectively has the same exterior appearance as a corresponding part of the M second optical fibers.

In an embodiment, N, M and C are equal to each other and the N first optical fibers respectively have the same colors as the M second optical fibers.

In an embodiment, the N first optical fibers respectively have the same exterior appearance as the M second optical fibers.

In an embodiment, the N first optical fibers and M second optical fibers are devoid of identifying markings.

In an embodiment, the cable module is devoid of optical fibers with identifying markings. In other words, in an embodiment, all the optical fibers comprised in the cable module are devoid of identifying markings.

In an embodiment, each of the N first optical fibers and each of the M second optical fibers is an optical waveguide comprising a core surrounded by a cladding, the core and the cladding having different refractive indexes and being surrounded by a protective coating.

In an embodiment, the optical waveguide is a dielectric waveguide.

In an embodiment, the protective coating is a polymer coating (e.g. an UV curable acrylate coating).

The protective coating may be made of a single layer or multiple layers (e.g. two layers).

Each of the N first optical fibers and each of the M second optical fibers may be single mode or multimode.

In an embodiment, each of the N first optical fibers and each of the M second optical fibers comprises a glass core surrounded by a glass cladding, the glass core and the glass cladding having different refractive indexes and being surrounded by a protective coating.

In an embodiment, for each of the N first optical fibers, the first diameter S1 represents the outer diameter of the respective protective coating.

In an embodiment, for each of the M second optical fibers, the second diameter S2 represents the outer diameter of the respective protective coating.

In an embodiment, the first diameter S1 differs from the second diameter S2 by at least 10% of the greater of the first diameter S1 and the second diameter S2.

In an embodiment, the first diameter S1 differs from the second diameter S2 by at least 15% of the greater of the first diameter S1 and the second diameter S2.

In an embodiment, the first diameter S1 differs from the second diameter S2 by at least 20% of the greater of the first diameter S1 and the second diameter S2.

In an embodiment, the first diameter S1 differs from the second diameter S2 by no more than 50% of the greater of the first diameter S1 and the second diameter S2.

In an embodiment, the first diameter S1 differs from the second diameter S2 by at least 30 µm.

In an embodiment, the first diameter S1 differs from the second diameter S2 by at least 50 µm.

In an example, the first diameter S1 may be equal to about 245 µm or 200 µm.

In an example, the second diameter S2 may be equal to about 200 µm or 180 µm or 160 µm.

In an embodiment, the N first optical fibers and the M second optical fibers are all housed within the cable module interior defined by the sheath without being separated from each other by any other additional sheath optionally present in the cable module.

In an embodiment, the cable module also comprises L third optical fibers extending longitudinally through the cable module interior, wherein L is an integer at least equal to 1 and each of the L third optical fibers has a unique color selected among said C different colors, an identifying marking and a third diameter S3 equal to the first diameter S1.

In an embodiment, L is an integer higher than 1.

In an embodiment, N+M+L>C.

In an embodiment, N+M+L ≤ 3*C.

For example, 2*C < N+M+L ≤ 3*C, with N=M=C and 1 ≤ L ≤ C.

In an embodiment, N=M=L=C. For example, N=M=L=C=12.

In an embodiment, for each of the L third optical fibers, the identifying marking is a colored marking having a color different from the unique color of the respective optical fiber.

Suitably, the identifying marking is on the exterior of the optical fibers.

Suitably, the identifying marking is visible (i.e. visually perceivable) from the outside of the optical fiber.

In an embodiment, the identifying marking is selected from the group comprising dots, rings, dashes and lines and any combinations thereof.

In an embodiment, the L third optical fibers all have the same identifying marking.

In an embodiment, at least part of the L third optical fibers respectively has the same color as a corresponding part of the N first optical fibers.

In an embodiment, L is equal to N and the L third optical fibers respectively have the same colors as the N first optical fibers.

In an embodiment, the N first optical fibers, the M second optical fibers and the L third optical fibers are all housed within the cable module interior defined by the sheath without being separated from each other by any other additional sheath optionally present in the cable module.

In an embodiment, the cable module also comprises K fourth optical fibers extending longitudinally through the cable module interior, wherein K is an integer at least equal to 1 and each of the K fourth optical fibers has a unique color selected among said C different colors, an identifying marking and a fourth diameter S4 equal to the second diameter S2.

In an embodiment, K is an integer higher than 1.

In an embodiment, N+M+L+K>C.

In an embodiment, N+M+L+K ≤ 4*C.

For example, 3*C < N+M+L+K ≤ 4*C, with N=M=L=C and 1 ≤ K ≤ C.

In an embodiment, N=M=L=K=C. For example, N=M=L=K=C=12.

In an embodiment, for each of the K fourth optical fibers, the identifying marking is a colored marking having a color different from the unique color of the respective optical fiber.

In an embodiment, the identifying marking may be selected from the group comprising dots, rings, dashes and lines and any combinations thereof.

Suitably, the identifying marking is on the exterior of the optical fibers.

Suitably, the identifying marking is visible (i.e. visually perceivable) from the outside of the optical fiber.

In an embodiment, the K fourth optical fibers all have the same identifying marking.

In an embodiment, at least part of the K fourth optical fibers has the same identifying marking as a corresponding part of the L third optical fibers.

In an embodiment, K is equal to L and the L third optical fibers and the K fourth optical fibers all have the same identifying marking.

In an embodiment, at least part of the K fourth optical fibers respectively has the same color as a corresponding part of the M second optical fibers.

In an embodiment, at least part of the K fourth optical fibers respectively has the same color as a corresponding part of the L third optical fibers.

In an embodiment, K is equal to M and the K fourth optical fibers respectively have the same colors as the M second optical fibers.

In an embodiment, N, M, C, L and K are equal to each other and the N first optical fibers, the M second optical fibers, the L third optical fibers and the K fourth optical fibers all have the same colors respectively.

In an embodiment, the N first optical fibers, the M second optical fibers, the L third optical fibers and the K fourth optical fibers are all housed within the cable module interior defined by the sheath without being separated from each other by any other additional sheath optionally present in the cable module.

The features and advantages of the present disclosure will be made apparent by the following detailed description of some exemplary embodiments thereof, provided merely by way of non-limiting examples, description that will be conducted by making reference to the attached drawings, wherein:
- figure 1 shows a schematic cross section of cable module according to an embodiment of the present disclosure;
- figure 2 shows a schematic cross section of a cable module according to another embodiment of the present disclosure;
- figure 3 shows a schematic cross section of an optical cable according to an embodiment of the present disclosure.

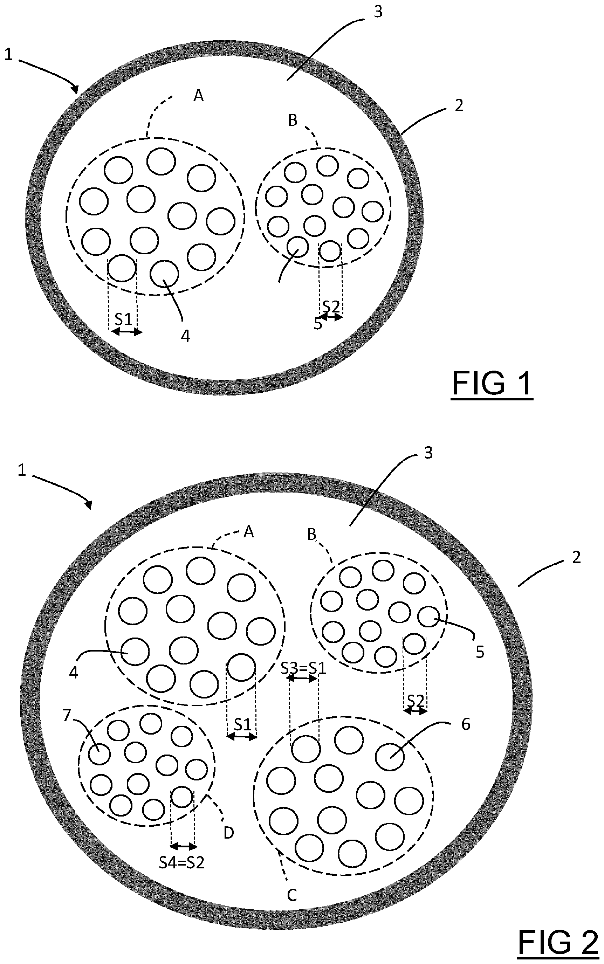

Figure 1 shows a schematic cross section of a cable module 1 according to an embodiment of the present disclosure.

The cable module 1 comprises a sheath 2 defining a cable module interior 3.

The sheath 2 may be made of a polymer material, for example an extruded thermoplastic polymer. In some embodiments, the sheath 2 may include a flame-retardant polymer.

The sheath 2 may be made of a single layer or multiple layers (e.g. two layers).

The cable module 1 can have, for example, an outer diameter (corresponding to the outer diameter of the sheath 2) in the range of 1mm to 5mm.

The cable module 1 comprises a first group A of N first optical fibers 4 extending longitudinally through the cable module interior 3, wherein N is an integer higher than 1.

The cable module 1 also comprises a second group B of M second optical fibers 5 extending longitudinally through the cable module interior 3, wherein M is an integer higher than 1.

The N first optical fibers 4 and the M second optical fibers 5 may be loosely disposed within the sheath 2 in an essentially parallel direction.

A strain-relief component (not shown) may be disposed within the cable module interior 3. The strain-relief component may comprise longitudinally extending strands (e.g. aramid strands) that extend along the length of the cable module 1 and surrounding the N first optical fibers 4 and the M second optical fibers 5 for absorbing tensile loads on the cable module 1.

Each of the N first optical fibers 4 and each of the M second optical fibers 5 is a dielectric waveguide comprising a core surrounded by a cladding (not shown). The cladding is in turn surrounded by a protective coating (not shown) providing mechanical protection to the core and the cladding. The protective coating may be made of a single layer or multiple layers (e.g. two layers) of a plastic material (e.g. acrylate).

The core and the cladding may be made of silica-based materials. However some other materials such as fluorozirconate, fluoroaluminate and chalcogenide glasses as well as crystalline materials such as sapphire, may be used.

In an alternative example, each of the N first optical fibers 4 and each of the M second optical fibers 5 may be a plastic optical fiber.

Core and cladding have different refractive indexes so that total reflection occurs at their boundary, which confines light and allows its transmission along the fiber.

Each of the N first optical fibers 4 and each of the M second optical fibers 5 can be single mode or multimode. The core diameter may be of about 8-9 µm (for single-mode fibers) or of about 50-100 µm (for multi-mode fibers). The cladding generally has a standard outer diameter of about 125 µm.

The N first optical fibers 4 all have a first diameter S1. The first diameter S1 represents the outer diameter of the respective protective coating.

The M second optical fibers 5 all have a second diameter S2 different from the first diameter S1. The second diameter S2 represents the outer diameter of the respective protective coating.

For example, the first diameter S1 is equal to about 245 µm while the second diameter S2 is equal to about 200 µm, 180 µm or 160 µm.

Alternatively, the first diameter S1 is equal to about 200 µm while the second diameter S2 is equal to about 180 µm or 160 µm.

Optical fibers having a diameter of 245 µm, 200 µm, 180 µm or 160 µm are known in the art.

For example, optical fibers having a diameter of 245pm are sold by the Applicant in a large group of products, including the product with commercial name BendBright^{™} XS; optical fibers having a diameter of 200 µm are sold by the Applicant with the commercial names BendBright^{™} A1, BendBright^{™} A2, and BendBright^{™} XS; and optical fibers having a diameter of 180 µm are sold by the Applicant with the commercial name BendBright^{™} XS.

The N first optical fibers 4 and the M second optical fibers 5 are colored so as to be uniquely identified and distinguished from each other. In particular, the protective coating of each of the N first optical fibers 4 and of the M second optical fibers 5 has a colored exterior appearance. Said colored exterior appearance may be obtained, for example, by adding a colorant to the base material of the protective coating (in this case we speak about "mass colored" coating) or by covering the protective coating with a colored dye.

In the first group A of the N first optical fibers 4 each fiber has a unique color selected among C different colors, wherein C is an integer higher than 1.

In the second group B of the M second optical fibers 5 each fiber has a unique color selected among said C different colors.

In the embodiment shown in figure 1, N=M=C=12.

In other words, in the embodiment shown in figure 1, the cable module 1 comprises twelve first optical fibers 4, all with the first diameter S1, each having a unique color selected among twelve different colors and twelve second optical fibers 5, all with the second diameter S2, each having a unique color selected among the same twelve different colors.

The C different colors may be the colors commonly used in the industry for optical fibers, namely: blue, orange, green, brown, slate, white, red, black, yellow, purple, rose, and aqua.

The N first optical fibers 4 and the M second optical fibers 5 are all devoid of any identifying markings (such as dots, dashes, lines or rings) that are usually used in the art to distinguish the fibers from each other.

In particular, the cable module 1 according to the embodiment of figure 1 is devoid of optical fibers with identifying markings. This advantageously overcomes the disadvantages described above of using identifying markings (namely, slowing the optical fiber cable production process, increasing the costs of manufacture, increasing the fiber diameter and the risk of affecting fiber optic attenuation).

Moreover, the use of a group of fibers having a smaller diameter enables to reduce the costs and the size of the cable module 1.

The N first optical fibers 4 respectively have the same exterior appearance as the M second optical fibers 5 in that they have no identifying marking and they respectively have the same colors. In particular, each of the N first optical fibers 4 has a corresponding optical fiber in the M second optical fibers 5 that has the same color.

The two groups A, B of N first optical fibers 4 and M second optical fibers 5 can thus be distinguished from each other by their diameter S1 or S2.

In particular, for each couple of corresponding optical fibers, having the same exterior appearance in the two groups of N first optical fibers 4 and M second optical fibers 5, the fibers are distinguishable by their diameter S1 or S2. For example, the red optical fiber in the first group A of N first optical fibers 4 may be distinguished from the corresponding red optical fiber in the second group B of M second optical fibers 5 by the different diameters S1 and S2.

An operator accessing the fibers 4, 5 can identify the optical fiber of interest among the N first optical fibers 4 and the M second optical fibers 5 with the help of a tool configured to measure the diameter of the fibers, in particular to recognize the difference between the first diameter S1 and the second diameter S2.

For example, the tool may be a plier or a die having a hole.

The hole may have a diameter with an intermediate dimension between the first diameter S1 and the second diameter S2 so that, if the fiber passes through the hole, the operator can quickly identify it as a fiber with the smaller diameter between S1 and S2, whereas if it does not pass through the hole the operator can quickly identify it as a fiber with the larger diameter between S1 and S2.

In an alternative example, the hole may have a diameter with a dimension slightly larger than the largest of S1 and S2 so that, if the fiber passes through the hole loosely, the operator can quickly identify it as a fiber with the smaller diameter between S1 and S2, whereas if it passes barely through the hole the operator can quickly identify it as a fiber with the larger diameter between S1 and S2.

It is noted that even if figure 1 shows an embodiment with only two groups A, B of colored optical fibers 4, 5 respectively having a first diameter S1 and a second diameter S2 different from each other, in order to increase fiber density the present disclosure also comprises the case of a cable module 1 comprising more than two groups of colored optical fibers, wherein the optical fibers of each group have a fiber diameter different from that of the optical fibers of the other groups.

For example, even if not shown, the present disclosure also comprises the case of a cable module 1 comprising three groups of optical fibers respectively having the same colors, wherein the optical fibers of the three groups respectively have a fiber diameter of 245µm, 200µm and 180µm.

Moreover, even if figure 1 shows an embodiment with two groups A, B of colored optical fibers 4, 5 with N=M=C, the present disclosure also comprises the case with N≠M wherein fibers having the same colors in the two groups A, B of colored optical fibers 4, 5 are distinguished by the fiber diameter.

Figure 2 shows a cable module 1 according to another embodiment of the present disclosure.

The cable module 1 of figure 2 has the same functional and structural features as the cable module 1 of figure 1 with regard to the sheath 2, the cable module interior 3, the optional strain-relief component, the N first optical fibers and the M second optical fibers. As far as these components is concerned, reference is thus made to what already disclosed above with reference to figure 1.

In addition to the components disclosed with reference to the cable module 1 of figure 1, the cable module 1 of figure 2 also comprises a third group C of L third optical fibers 6 and a fourth group D of K fourth optical fibers 7 extending longitudinally through the cable module interior 3, wherein L and K are both integers at least equal to 1.

Each of the L third optical fibers 6 has a unique color selected among said C different colors, an identifying marking on the exterior of the optical fiber and a third diameter S3 equal to the first diameter S1.

Each of the K fourth optical fibers 7 has a unique color selected among said C different colors, an identifying marking on the exterior of the optical fiber and a fourth diameter S4 equal to the second diameter S2.

Except for the identifying marking, for the structural and functional features of the L third optical fibers 6 and the K fourth optical fibers 7 reference is made to what disclosed above with reference to the N first optical fibers 4 and the M second optical fibers 5.

In the embodiment shown in figure 2, N=M=C=L=K=12.

For each of the L third optical fibers 6 and for each of the K fourth optical fibers, the identifying marking is colored with a color different from the unique color of the respective optical fiber so as to be visible.

The identifying marking may be selected from the group comprising dots, rings, dashes and lines and any combinations thereof.

For example, the identifying marking may comprise a single ring running around the fiber circumference or multiple rings (of the same color or with different colors) that are spaced equally or differently from each other along the length of the optical fiber.

In another example, the identifying marking may comprise multiple parallel dashes or lines (of the same color or with different colors) running lengthwise along the length of the optical fiber. The dashes or lines may be continuous or discontinuous along the fiber length, may be of the same length and/or thickness or with different length and/or thickness. Moreover, they may be periodically repeated along the fiber length.

The third optical fibers 6 and the fourth optical fibers 7 respectively have the same C different colors. In particular, each fiber of the L third optical fibers 6 has a corresponding optical fiber in the K fourth optical fibers 7 that has the same color. Moreover, all the L third optical fibers 6 and the K fourth optical fibers 7 have the same identifying marking, which may be of a same color (other than the C different colors) for all the fibers 6, 7 or of a different color for the various fibers 6, 7.

In particular, the cable module 1 of figure 2 comprises four groups A, B, C, D of optical fibers 4, 5, 6, 7 respectively having the same twelve different colors. In particular, each fiber in a group has a corresponding optical fiber with the same color in the other groups.

Therefore, corresponding optical fibers having the same color in the first group A and in the second group B, being devoid of any identifying marking, can be distinguished from each other by their diameter S1 or S2.

Corresponding optical fibers having the same color in the third group C and in the fourth group D, having the same identifying marking, can be distinguished from each other by their diameter S3 or S4.

Corresponding optical fibers having the same color in the first group A and in the third group C, having the same fiber diameter S1=S3, can be distinguished from each other by the identifying marking, which is present only in the third optical fibers 6.

Corresponding optical fibers having the same color in the second group B and in the fourth group D, having the same fiber diameter S2=S4, can be distinguished from each other by the identifying marking, which is present only in the fourth optical fibers 7.

It is noted that even if figure 2 shows an embodiment with only four groups A, B, C, D of colored optical fibers, in order to increase fiber density the present disclosure also comprises the case of a cable module 1 comprising more than four groups of colored optical fibers, wherein, in a first half of the groups, the optical fibers are devoid of identifying marking and, in a second half of the groups, the optical fibers indeed have the identifying marking. The optical fibers belonging to the different groups will be uniquely identified by their color, their diameter and the absence/presence of identifying marking.

The cable module 1 according to the present disclosure may constitute a stand-alone optical cable or may be part of an optical cable comprising one or more cable modules 1.

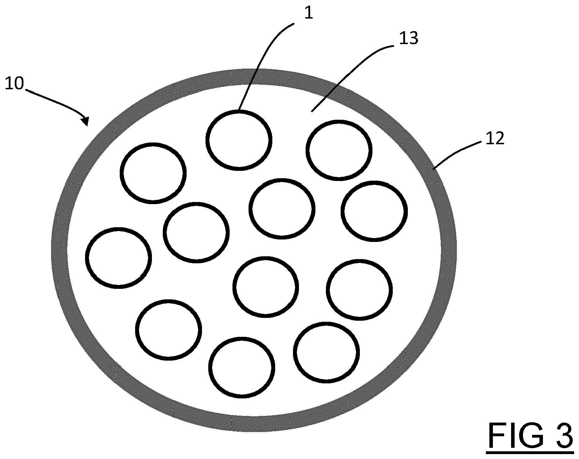

Figure 3 shows an optical cable 10 according to an embodiment of the present disclosure.

The optical cable 10 comprises a jacket 12 defining a cable interior 13.

The jacket 12 may be made of a single layer or multiple layers (e.g. two layers).

The jacket 12 may be made of a polymer material, for example an extruded thermoplastic polymer. In some embodiments jacket 12 may include a flame-retardant polymer.

The optical cable 10 can have, for example, an outer diameter (corresponding to the outer diameter of the jacket 12) in the range of 4 mm to 40 mm.

The optical cable 10 is a high-density cable comprising a plurality of cable modules 1 (e.g. twelve) according to the present disclosure extending longitudinally through the cable interior 13.

The plurality of cable modules 1 are not stranded within the optical cable 10, although stranding may be used for certain applications. For example, the plurality of cable modules 1 might be twisted in a helical fashion with respect to one another.

A strain-relief component (not shown) may be disposed within the cable interior 13. The strain-relief component may comprise longitudinally extending strands (e.g. aramid strands) that extend along the length of the optical cable 10 and surrounding the cable modules 1 for absorbing tensile loads on the optical cable 10.

In addition or in alternative, the optical cable 10 may comprise a central strength member (not shown) and the cable modules 1 may be disposed around it.

In an embodiment (not shown), the optical cable 10 includes a single cable module 1 and a strength element.

In an embodiment, the optical cable 10 includes a cable mudule 1 according to the present disclosure and one or more optical modules different from cable module 1 of the present disclosure. In said embodiment, the optical cable 10 may further include a strength member (not shown).

The plurality of cable modules 1 may all be made according to the embodiment of figure 1 or according to the embodiment of figure 2. In alternative, part of the plurality of cable modules 1 may be made according to the embodiment of figure 1 and part according to the embodiment of figure 2.

The optical cable 10 may be particularly useful for use in fiber optic cabling systems and optical networks with a high degree of fiber density like, for example, data centers, optical access networks generally called FTTX, such as FTTH (Fiber To The Home), FTTP (Fiber To The Premises), FTTB (Fiber To The Building), FTTC (Fiber To The Cabinet) FTTx as well as optical long-haul data transmission networks.

For example, the optical cable 10 may comprise 6, 8, 12, 18 or 24 cable modules 1 according to the embodiment of figure 1 (each accommodating 24 fibers), respectively accommodating a total of 6*24, 8*24, 12*24, 18*24 or 24*24 optical fibers.

In the optical cable 10, the optical fibers within each cable module 1 may be easily identified and distinguished from each other as explained above by their colors, their diameters and -in case of cable modules 1 according to the embodiment of figure 2- the presence/absence of identifying markings.

Moreover, the optical fibers belonging to the plurality of cable modules 1 as a whole may be easily identified and distinguished from each other because the optical fibers of each cable module 1 are located within the respective sheath 2, which isolate the fibers of each cable module 1 from the fibers of the other cable modules 1.

## Claims

1. A cable module (1) comprising
- a sheath (2) defining a cable module interior (3);
- N first optical fibers (4) extending longitudinally through the cable module interior (3), each of the N first optical fibers (4) having a unique color selected among C different colors, wherein N and C are both integers higher than 1;
- M second optical fibers (5) extending longitudinally through the cable module interior (3), each of the M second optical fibers (5) having a unique color selected among said C different colors, wherein M is an integer higher than 1;
wherein the N first optical fibers (4) all have a first diameter S1 and the M second optical fibers (5) all have a second diameter S2 different from the first diameter S1.

2. A cable module (1) according to claim 1, wherein C < N+M ≤ 2*C.

3. A cable module (1) according to claim 1 or 2, wherein N, M and C are equal to each other and the N first optical fibers (4) respectively have the same colors as the M second optical fibers (5).

4. A cable module (1) according to any of previous claims, wherein the N first optical fibers (4) and the M second optical fibers (5) are all devoid of identifying markings.

5. A cable module (1) according to any of previous claims, wherein the first diameter S1 differs from the second diameter S2 by at least 10% of the greater of the first diameter S1 and the second diameter S2.

6. A cable module (1) according to any of previous claims, wherein the first diameter S1 is equal to about 245 µm or 200 µm.

7. A cable module (1) according to any of previous claims, wherein the second diameter S2 is equal to about 200 µm or 180 µm or 160 µm.

8. A cable module (1) according to any of previous claims, also comprising L third optical fibers (6) extending longitudinally through the cable module interior (3), wherein L is an integer at least equal to 1 and each of the L third optical fibers (6) has a unique color selected among said C different colors, an identifying marking and a third diameter S3 equal to the first diameter S1.

9. A cable module (1) according to claim 8, wherein L is equal to N and the L third optical fibers (6) respectively have the same colors as the N first optical fibers (4).

10. A cable module (1) according to any of previous claims, also comprising K fourth optical fibers (7) extending longitudinally through the cable module interior, wherein K is an integer at least equal to 1 and each of the K fourth optical fibers (7) has a unique color selected among said C different colors, an identifying marking and a fourth diameter S4 equal to the second diameter S2.

11. A cable module (1) according to claim 10, wherein K is equal to M and the K fourth optical fibers (7) have the same colors as the M second optical fibers (5).

12. A cable module (1) according to claim 8 and 10, wherein K is equal to L and the L third optical fibers and the K fourth optical fibers all have the same identifying marking.

13. An optical cable (10) comprising:
- a cable jacket (12) defining a cable interior (13) and at least one cable module (1) according to any of previous claims, extending longitudinally through the cable interior (13).
